## Europäisches Patentamt
## European Patent Office
## Office européen des brevets

(19)

(11) Numéro de publication : **0 420 727 B1**

(12) **FASCICULE DE BREVET EUROPEEN**

(45) Date de publication du fascicule du brevet :
**16.03.94 Bulletin 94/11**

(51) Int. Cl.$^5$ : **G02F 1/133**, G09F 9/35

(21) Numéro de dépôt : **90402598.8**

(22) Date de dépôt : **20.09.90**

(54) **Procédé et dispositif d'optimisation du contraste et de l'angle de vue d'un afficheur à cristaux liquides.**

(30) Priorité : **22.09.89 FR 8912454**

(43) Date de publication de la demande :
**03.04.91 Bulletin 91/14**

(45) Mention de la délivrance du brevet :
**16.03.94 Bulletin 94/11**

(84) Etats contractants désignés :
**DE FR GB IT**

(56) Documents cités :
**EP-A- 0 224 869**
**GB-A- 2 072 915**
**US-A- 4 119 842**
**PATENT ABSTRACTS OF JAPAN, vol. 9, no. 62**
**(P-342)(1785), 19 mai1985; & JP - A - 59195627**

(73) Titulaire : **SEXTANT Avionique**
**5/7 rue Jeanne Braconnier Parc Tertiaire**
**F-92366 Meudon la Forêt Cedex (FR)**

(72) Inventeur : **Fagard, Pierre**
**7, rue Jules Massenet**
**F-78180 Montigny le Bretonneux (FR)**

(74) Mandataire : **de Saint-Palais, Arnaud Marie et al**
**CABINET MOUTARD 35, Avenue Victor Hugo**
**F-78960 Voisins le Bretonneux (FR)**

EP 0 420 727 B1

Jouve, 18, rue Saint-Denis, 75001 PARIS

## Description

L'invention concerne un procédé et un dispositif d'optimisation du contraste et de l'angle de vue d'un afficheur à cristaux liquides.

Elle s'applique plus particulièrement, mais non exclusivement, aux afficheurs à cristaux liquides de type transmissif destinés à être observés selon un axe de vision déterminé. Tel est notamment le cas dans les tableaux de bord des véhicules et, en particulier, des aéronefs.

A l'heure actuelle, de nombreux afficheurs de ce genre sont équipés de moyens permettant d'effectuer un réglage de contraste, ce réglage s'effectuant au début d'une phase d'utilisation de l'afficheur et n'étant plus modifié au cours de cette phase.

Or, il s'avère que, pour de multiples raisons, ce mode de réglage ne permet pas d'obtenir durablement un contraste optimum pour l'angle de vision désiré.

Tout d'abord, on constate que, lorsqu'il effectue le réglage, l'opérateur se trouve rarement en position d'utilisation, de sorte que le réglage effectué n'est pas optimum.

Par ailleurs, une fois le réglage effectué, le contraste varie fréquemment en raison de multiples causes telles que, par exemple, une variation de température du cristal liquide qu'il est délicat de compenser par un asservissement en témpérature de la tension de commande du LCD. D'autre part, des dispersions de la tension de seuil du cristal provenant de fournisseurs différents, rendent ce type de réglage nécessaire.

On a également proposé de régler la cellule à cristaux liquides de manière à maintenir sensiblement constante la luminance des signaux lumineux transmis dans une zone test. Toutefois, un tel réglage qui se trouve décrit dans le "patent abstracts of Japan", vol. 9, N° 62 (p 342) (1785), 19 Mai 1985, n'effectue pas un contrôle du contraste.

L'invention a donc plus particulièrement pour but de supprimer ces inconvénients.

A cet effet, elle propose un procédé selon le préambule de la revendication 1 pour l'optimisation du contraste selon un angle de vision préférentiel d'un afficheur à cristaux liquides.

Selon l'invention, ce procédé est caractérisé par les caractéristiques de la partie caractérisante de la revendication 1.

Bien entendu, la détermination de la tension de commande en fonction du contraste déterminé pourra s'effectuer de multiples façons.

Ainsi, par exemple, la valeur de contraste déterminée à un instant t pourra être soustraite à la valeur de contraste déterminée à l'instant précédent t-1 et la valeur de la tension de commande pourra être augmentée ou éventuellement diminuée en fonction du signe de cette soustraction.

Bien entendu, l'invention concerne également un dispositif pour la mise en oeuvre du procédé précédemment défini, dont un exemple d'exécution sera décrit ci-après, à titre d'example non limitatif, avec référence aux dessins annexés dans lesquels :

La figure 1 est un schéma synoptique d'un afficheur équipé de ce dispositif ;

La figure 2 est une vue de face d'un panneau d'affichage utilisable dans le dispositif représenté sur la figure 1 ; et

Les figures 3 et 4 sont des coupes schématiques respectivement selon A-A (figure 3) et selon B-B (figure 4) du panneau d'affichage représenté figure 2.

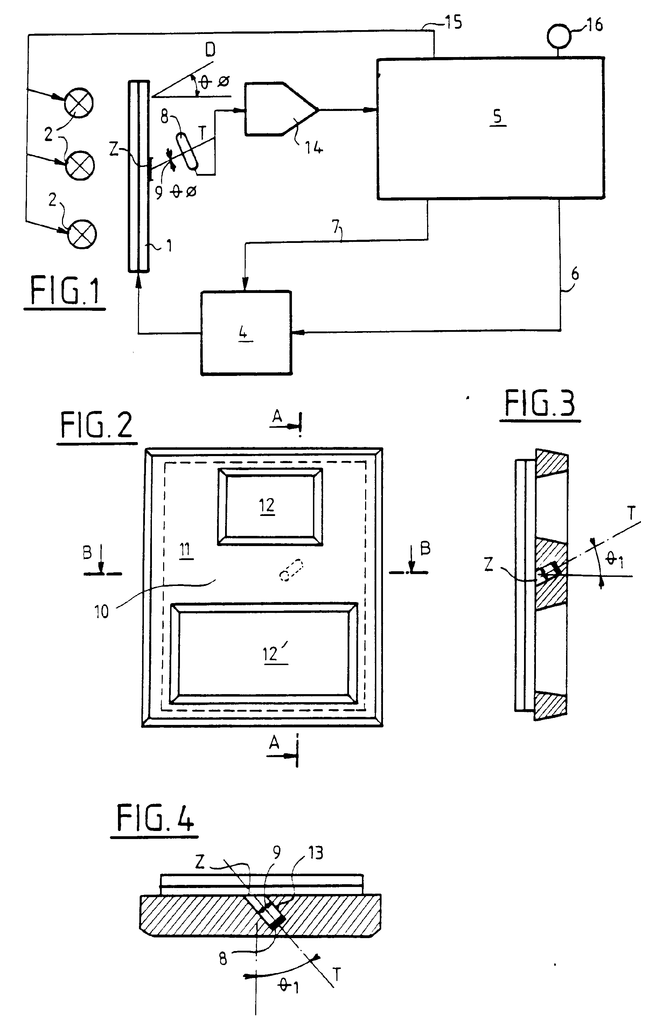

Comme précédemment mentionné, l'afficheur selon l'invention fonctionne en mode transmissif et comprend, comme représenté sur la figure 1, une cellule à cristaux liquides 1 éclairée d'un côté par un dispositif lumineux 2 et qui est destinée à être observée de l'autre côté selon un axe de vision préférentiel D faisant des angles $\theta_1$ et $\emptyset_1$ avec la normale au plan de la cellule.

Cette cellule à cristaux liquides est pilotée par un circuit de commande ("driver") de type classique 4 apte à appliquer, sur des électrodes sélectionnées de la cellule 1, une tension de commande $V_{LCD}$ déterminée, la sélection des électrodes, et par conséquent des pixels de l'image à réaliser, étant effectuée par un calculateur (liaison 6). Dans cet exemple, le circuit de commande 4 comprend des moyens de réglage de la tension de commande qu'il délivre. Toutefois, à l'encontre des circuits existants, ces moyens de réglage ne comprennent pas un potentiomètre actionnable par l'utilisateur mais sont gérés par le calculateur 5 (liaison 7).

Conformément à l'invention, le calculateur 5 est conçu de manière à appliquer sur les électrodes de la cellule 1 comprises dans une zone de test déterminée Z, une tension provoquant l'excitation périodique des pixels inclus dans cette zone, qui passent donc successivement de l'état excité "ON" à l'état désexcité "OFF" puis à nouveau à l'état "ON" et ainsi de suite.

La lumière transmise dans cette zone Z de l'afficheur est détectée par une cellule photoélectrique 8 collimatée (lentille 9) orientée de manière à pouvoir "observer" cette zone selon un axe déterminé T parallèle à l'axe de vision préférentiel D.

Cette cellule, ainsi que la zone de l'afficheur sont protégées de la lumière ambiante par un masque optique qui, dans l'exemple représenté sur les figures 2 à 4, consiste en la traverse 10 d'une grille 11 plaquée contre la face antérieure de la cellule à cristaux liquides 1 et qui divise celle-ci en deux aires d'affichage 12, 12′. La cellule 8 est ici disposée au fond d'un puits 13 ménagé dans la traverse 10 coaxialement à l'axe T. Son ouverture, qui est plaquée contre la cellule, définit la zone de test Z.

Bien entendu, l'invention ne se limite pas à une telle disposition. Ainsi, la cellule photoélectrique 8 et l'optique 9 qui lui est associée pourraient être montées dans un dispositif à orientation variable (par exemple à rotule) de manière à ce que l'utilisateur puisse régler son orientation à sa convenance.

Le signal engendré par la cellule 8, qui consiste en une suite alternée de valeurs représentatives des luminances de la cellule 1 à l'état excité (soit L ON) et à l'état désexcité (soit L OFF) est transmis au calculateur 5, après conformation dans un adaptateur 14.

Ce calculateur 5 est conçu de manière à effectuer le quotient des valeurs consécutives L ON, L OFF de chaque couple, de manière à pouvoir obtenir à chaque instant une valeur C représentative du contraste

$$\left( C \ = \ \frac{L \ ON}{L \ OFF} \right) .$$

Ces valeurs de contraste sont analysées par le calculateur 5 qui fait évoluer le réglage de la cellule à cristaux liquides 1 de manière à obtenir un contraste maximum dans la direction préférentielle D. D'une façon analogue, des niveaux de gris peuvent être pris en compte et asservis simplement.

Tel que précédemment décrit, ce dispositif présente l'avantage de pouvoir s'affranchir :
- des dispersions de tension de seuil du cristal,
- de la température ambiante, et
- des réglages habituels sur ce type d'afficheurs.

Il permet en outre de réaliser un auto-test permanent de l'ensemble afficheur + module d'éclairage. Dans ce cas, il pourra éventuellement comprendre des moyens permettant d'engendrer un signal d'alarme lorsque la valeur représentative du contraste est sensiblement égale à 1 ou indéterminée à l'issue de l'exploration de toute la plage de tension de commande du LCD possible.

Par ailleurs, le calculateur 5 effectue la commande de puissance (via liaison 15) du module d'éclairage 2 en fonction d'une information de consigne externe, (émanant par exemple d'un bouton de commande 16), par conséquent la mesure de luminosité effectuée par la cellule 8 permet de vérifier la corrélation entre la puissance lumineuse commandée par le calculateur 5 et la luminance effectivement mesurée par la cellule au travers de l'afficheur.

Bien entendu, l'invention ne se limite pas au mode d'exécution précédemment décrit. Ainsi, par exemple, la cellule à cristaux liquides pourrait être de type réflectif ou translectif. Dans ce cas, l'ensemble opto-électronique de détection devra être disposé en un emplacement écarté de l'afficheur.

**Revendications**

1. Procédé pour l'optimisation du contraste selon un axe de vision préférentiel d'un afficheur à cristaux liquides, ce procédé comprenant les phases suivantes :
   - l'excitation périodique d'une zone déterminée (Z) de l'afficheur (1) ;
   - la mesure en permanence de la luminance de ladite zone (Z) ; et
   - le réglage de la tension de commande de la cellule (1) à cristaux liquides de l'afficheur en fonction de la luminance détectée ; caractérisé en ce que :
   - l'excitation périodique de ladite zone, est effectuée de manière à la faire passer successivement de l'état excité "ON" à l'état désexcité ou "OFF", puis à nouveau à l'état excité "ON" et ainsi de suite et à pouvoir discerner les luminances de chaque couple successif état excité, état désexcité,
   - la phase de mesure est réalisée au moyen d'une cellule photoélectrique (8) orientée de manière à observer la susdite zone selon un axe parallèle au susdit axe de vision, cette phase de mesure comprenant la détermination d'une succession de couples de valeurs comportant chacun une valeur correspondant à la luminance $L_{ON}$ de la zone à l'état excité et d'une valeur correspondant à la luminance $L_{OFF}$ de la zone à l'état désexcité ;
   - une phase supplémentaire est prévue pour effectuer la détermination du contraste (C) à partir des valeurs de luminance de chacun desdits couples ; et
   - le réglage de la tension de commande de la cellule à cristaux liquides de l'afficheur est effectué en fonction du contraste précédemment déterminé.

2. Procédé selon la revendication 1, caractérisé en ce qu'il comprend la mesure de l'écart entre la valeur de contraste déterminée à un instant t et celle déterminée à l'instant t-1 et le réglage de la tension de commande de la cellule à cristaux liquides (1) en fonction de cet écart.

3. Procédé selon l'une des revendications 1 et 2, caractérisé en ce qu'il effectue un auto-test permanent de l'ensemble afficheur (1) + module d'éclairage (2).

4. Procédé selon la revendication 3, caractérisé en ce qu'il comprend l'émission d'un signal d'alarme lorsque la valeur représentative du contraste est sensiblement égale à 1.

5. Dispositif pour l'optimisation selon un axe de vision préférentiel du contraste d'un afficheur à cristaux liquides (1) de type transmissif, conformément au procédé selon la revendication 1, ce dispositif comprenant un circuit de commande (4) apte à appliquer sur des électrodes de la cellule (1) comprise dans une zone de test déterminée (Z) une tension provoquant l'excitation périodique des pixels inclus dans cette zone (Z), une cellule photoélectrique placée en regard de ladite zone, et des moyens de réglage permettant d'effectuer le réglage de la cellule (1) en fonction du signal délivré par ladite cellule, caractérisé en ce que :

- la cellule photoélectrique (8) est collimatée et est orientée de manière à observer la zone (Z) selon un axe déterminé (T) parallèle au susdit axe de vision préférentiel (D) et à fournir un signal de luminance pour chaque état excité/désexcité de ladite zone ;
- le signal fourni par la cellule photoélectrique (8) est transmis à un calculateur (5) conçu de manière à déterminer, à chaque instant, une valeur de contraste à partir des couples successifs de valeurs de luminance détectées par la cellule photoélectrique (8) ;
- les moyens de réglage agissent sur la cellule (1) en fonction des valeurs de contraste ainsi déterminées, de manière à obtenir un contraste maximum.

6. Dispositif selon la revendication 5, caractérisé en ce que la cellule photoélectrique (8) est disposée au fond d'un puits (13) dont l'ouverture, plaquée contre la cellule (1), définit la zone de test (Z).

7. Dispositif selon la revendication 5, caractérisé en ce que la cellule photoélectrique (8) et l'optique (9) qui lui est associé sont montés dans un dispositif à orientation variable, réglable par l'utilisateur.

**Patentansprüche**

1. Verfahren zur Optimierung des Kontrasts eines Flüssigkristall-Anzeigers gemäß einer bevorzugten Sehachse, wobei dieses Verfahren die folgenden Phasen aufweist:
- die periodische Erregung einer bestimmten Zone (Z) des Anzeigers (1),
- die permanente Messung der Leuchtdichte dieser Zone (Z), und
- die Einstellung der Steuerspannung der Flüssigkristall-Zelle (1) des Anzeigers in Abhängigkeit von der erfaßten Leuchtdichte,

dadurch gekennzeichnet, daß

- die periodische Erregung dieser Zone derart durchgeführt wird, daß sie nacheinander vom erregten Zustand "ON" in den aberregten Zustand oder "OFF" und wieder in den erregten Zustand "ON" usw. übergeht, und daß die Leuchtdichten jedes aufeinanderfolgenden Paars erregter Zustand, aberregter Zustand erfaßt werden können,
- die Meßphase mittels einer photoelektrischen Zelle (8) durchgeführt wird, die derart ausgerichtet ist, daß sie die erwähnte Zone gemäß einer Achse parallel zur Sehachse beobachtet, wobei diese Meßphase die Bestimmung einer Folge von Wertpaaren enthält, die je einen Wert entsprechend der Leuchtdichte $L_{ON}$ der Zone im erregten Zustand und einen Wert entsprechend der Leuchtdichte $L_{OFF}$ der Zone im aberregten Zustand aufweisen,
- eine zusätzliche Phase vorgesehen ist, um die Bestimmung des Kontrasts (C) ausgehend von den Leuchtdichtewerten jedes dieser Paare durchzuführen, und
- die Einstellung der Steuerspannung der Flüssigkristall-Zelle des Anzeigers in Abhängigkeit vom vorher bestimmten Kontrast durchgeführt wird.

2. Verfahren nach Anspruch 1, dadurch gekennzeichnet, daß es die Messung des Abstands zwischen dem in einem Zeitpunkt t bestimmten Kontrastwert und dem im Zeitpunkt t-1 bestimmten Kontrastwert und die Einstellung der Steuerspannung der Flüssigkristallzelle (1) in Abhängigkeit von diesem Abstand enthält.

3. Verfahren nach einem der Ansprüche 1 und 2, dadurch gekennzeichnet, daß es einen permanenten Selbsttest der Einheit Anzeiger (1) + Beleuchtungsmodul (2) durchführt.

4. Verfahren nach Anspruch 3, dadurch gekennzeichnet, daß es die Aussendung eines Alarmsignals enthält, wenn der für den Kontrast repräsentative Wert im wesentlichen gleich 1 ist.

5. Vorrichtung zur Optimierung des Kontrasts eines Flüssigkristall-Anzeigers (1) des übertragenden Typs gemäß einer bevorzugten Sehachse gemäß dem Verfahren nach Anspruch 1, wobei diese Vorrichtung einen Steuerkreis (4), der auf Elektroden der Zelle (1), die sich in einer bestimmten Testzone (Z) befindet, eine Spannung anlegen kann, die die periodische Erregung von Pixeln erzeugt, die in dieser Zone (Z) eingeschlossen sind, eine photoelektrische Zelle, die vor dieser Zone angeordnet ist, und Einstellmittel enthält, die es erlauben, die Einstellung der Zelle (1) in Abhängigkeit von dem von dieser Zelle gelieferten Signal durchzuführen, dadurch gekennzeichnet, daß

- die photoelektrische Zelle (8) kollimiert und so ausgerichtet ist, daß sie die Zone (Z) gemäß einer bestimmten Achse (T) parallel zur bevorzugten Sehachse (D) beobachtet und ein Leuchtdichtesignal für jeden Zustand erregt/aberregt dieser Zone liefert,
- das von der photoelektrischen Zelle (8) gelieferte Signal an einen Rechner (5) übertragen wird, der so ausgebildet ist, daß er zu jedem Zeitpunkt einen Kontrastwert ausgehend von den aufeinanderfolgenden Paaren von Leuchtdichtewerten, die von der photoelektrischen Zelle (8) erfaßt werden, bestimmt,
- die Einstellmittel auf die Zelle (1) in Abhängigkeit von den so bestimmten Kontrastwerten einwirken, um einen maximalen Kontrast zu erhalten.

6. Vorrichtung nach Anspruch 5, dadurch gekennzeichnet, dass die photoelektrische Zelle (8) auf dem Boden eines Schachtes angeordnet (13) angeordnet ist, dessen gegen die Zelle (1) angelegte Öffnung die Testzone (Z) begrenzt.

7. Verfahren nach Anspruch 5, dadurch gekennzeichnet, dass die photoelektrische Zelle (8) und die ihr zugeordnete Optik (9) in einer Vorrichtung variabler Ausrichtung angeordnet sind, die vom Benutzer eingestellt werden kann.

## Claims

1. A method of optimizing the contrast according to a preferential axis of vision of a liquid crystal display, this method comprising the following phases :
   - periodic excitation of a given zone (Z) of the display (1) ;
   - permanent measurement of the luminance of said zone (Z) ; and
   - adjustment of the control voltage of the liquid crystal cell (1) of the display as a function of the detected luminance,
   characterized in that :
   - the periodic excitation of said zone is effected so as to cause it to pass successively from the energized "ON" state to the de-energized or "OFF" state, then again to the energized "ON" state and so on and to be able to discern the luminances of each successive energized state, de-energized state pair ;
   - the measurement phase is carried out by means of a photoelectric cell(8) oriented for observing the said zone according to an axis parallel to said axis of vision, said phase comprising the determination of a succession of pairs of values, each comprising a value corresponding to the luminance $L_{ON}$ of the zone in the energized state and a value corresponding to the luminance $L_{OFF}$ of the zone in the de-energized state ;
   - an additional phase is provided for determining the contrast (C) from the luminance values of each of said pairs ; and
   - adjustment of the control voltage of the liquid crystal cell of the display is made as a function of the previously determined contrast.

2. The method as claimed in claim 1, characterized in that it comprises measurement of the difference between the contrast value determined at a time t and that determined at time t-1 and adjustment of the control voltage of the liquid crystal cell (1) as a function of this difference.

3. The method as claimed in one of claims 1 and 2, characterized in that it provides permanent self-testing of the display (1) + lighting module (2) assembly.

4. The method as claimed in claim 3, characterized in that it comprises the emission of an alarm signal when the value representative of the contrast is substantially equal to 1.

5. A device for optimizing, according to a preferential axis of vision, the contrast of a transmissive type liquid crystal display (1), in accordance with the method as claimed in claim 1, this device comprising a control circuit (4) adapted for applying, to the electrodes of the cell (1) included in a given test zone (Z), a voltage causing periodic energization of the pixels included in this zone (Z), a photoelectric cell placed opposite said zone and adjustment means for adjusting the cell (1) as a function of the signal delivered by said cell, characterized in that :
   - the photoelectric cell (8) is collimated and is oriented so as to observe the zone (Z) along a given axis (T) parallel to said preferential axis of vision (D) and deliver a luminance signal for each energized/de-energized state of said zone,
   - the signal delivered by the photoelectric cell (8) is transmitted to a computer (5) adapted for determining a contrast value at all times from successive pairs of luminance values detected by the photoelectric cell (8),

- the adjustment means act on the cell (1) as a function of the contrast values thus defined, so as to obtain maximum contrast.

6. The device as claimed in claim 5, characterized in that said photoelectric cell (8) is disposed at the bottom of a well (13) whose opening, applied against the cell (1), defines the test zone (Z).

7. The device as claimed in claim 5, characterized in that the photoelectric cell (8) and the optical system (9) associated therewith are mounted in a variable orientation device adjustable by the user.

FIG.1

FIG.2

FIG.3

FIG.4

7